# EUROPÄISCHE PATENTSCHRIFT

(11) **EP 0 973 597 B1**
(45) Veröffentlichungstag und Bekanntmachung des Hinweises auf die Patenterteilung: **07.02.2001**
(21) Anmeldenummer: 98924110.4
(22) Anmeldetag: 09.04.1998
(51) Int. Cl.: B01D 39/16, B01D 46/24

(54) **FILTERLEMENT AUS ZUSAMMENGESINTERTEN KUNSTSTOFFTEILCHEN**
SINTERED PLASTIC PARTICLES FILTER ELEMENT
ELEMENT DE FILTRAGE EN PARTICULES FRITTEES DE MATIERE PLASTIQUE

(30) Priorität: 11.04.1997 DE 19715196
(43) Veröffentlichungstag der Anmeldung: 26.01.2000
(73) Patentinhaber: Herding GmbH Filtertechnik, 92224 Amberg (DE)
(72) Erfinder: HERDING, Walter, D-92256 Hahnbach (DE); RAABE, Wolfgang, D-92224 Amberg (DE)
(74) Vertreter: Klunker . Schmitt-Nilson . Hirsch
(86) Internationale Anmeldenummer: EP9802110
(87) Internationale Veröffentlichungsnummer: WO9846327

(56) Entgegenhaltungen:
- EP-A- 0 250 801
- EP-B- 0 393 374
- WO-A-93/19832
- DE-A- 4 418 032
- GB-A- 2 119 674
- GB-A- 2 294 468

## Beschreibung

Die Erfindung betrifft ein Filterelement aus zusammengesinterten Kunststoffteilchen, das im wesentlichen die Gestalt eines schmalen, hohlen Kastens mit zwei großen, zick-zack-artig oder gewellt verlaufenden, ersten Seitenwänden, zwei schmalen, zweiten Seitenwänden, die die ersten Seitenwände miteinander verbinden, einer geschlossenen Bodenseite und einer gegenüberliegenden, offenen Seite besitzt, wobei die Berge und Täler der ersten Seitenwände einen Verlauf in Richtung von der Bodenseite zu der offenen Seite haben und wobei das Filterelement an der offenen Seite einen Kopf zur Befestigung aufweist, der länglich ist und mindestens eine Durchströmungspassage bildet.

Aus der DE 42 11 529 Al ist ein derartiges Filterelement bekannt, dessen Kopf auch aus zusammengesinterten Kunststoffteilchen besteht. Derartige Filterelemente, die auch Filtertaschen oder Lamellen-Filterelemente genannt werden, eignen sich generell zum Abscheiden von Partikeln aus zu filternden, flüssigen oder gasförmigen Medien. Besonders bevorzugte Einsatzgebiete sind das Abscheiden von Feststoffpartikeln aus gasförmigen Medien, wie Rauchgas oder Luft, sowie das Abscheiden von Feststoffpartikeln aus Flüssigkeiten oder Flüssigkeitströpfchen, wie Wasser oder Öl.

Aus EP-A-0 250 801 ist ein weiteres Filterelement in der Form eines hohlen Kastens mit wellenförmig verlaufenden großen Seitenwänden bekannt, das aus zwei jeweils eine der großen Seitenhälften enthaltenden Hälften durch Verschmelzen der beiden Randbereich miteinander erzeugt wird. Die beiden Hälften werden getrennt aus einem luftgelegten Vlies aus thermoplastischen Fasern, die in einer wellenförmigen Form miteinander verschmolzen sind, hergestellt und danach an den Randseiten sowie an der Bodenseite miteinander verschmolzen. An der offenen Kopfseite sind die beiden miteinander vereinigten Hälften in eine Stützstruktur aus Elastomer eingebettet. Derartige Filterelemente aus Vliesmaterial haben verglichen mit den Filterelementen aus zusammengesinterten Kunststoffteilchen gänzlich andere Festigkeitseigenschaften, sie haben ein anderes Eigengewicht und stellen deshalb an die Verbindung zwischen den Vliesmaterialhälften und der Stützstruktur am Kopf gänzlich andere Anforderungen. Insbesondere lassen sich die Beanspruchungen und Belastungen im Betrieb nicht miteinander vergleichen, zumal die hohen Belastungen, die Abreinigen mit einem der üblichen Strömungsrichtungen entgegengesetzten Druckluftstoß auftreten, bei dem Filterelement aus dieser Schrift nicht berücksichtigt werden müssen.

Üblicherweise werden die Filterelemente in Filtervorrichtungen eingesetzt, und das zu filternde Medium kann von der Rohgasseite der Filtervorrichtung durch die Seitenwände der Filterelemente in deren hohles Inneres und von dort durch die Durchströmungspassage des Kopfes zu der Reingasseite der Filtervorrichtung strömen. Die Rohgasseite und die Reingasseite der Filtervorrichtung sind dabei durch eine Trennwand voneinander getrennt, die im wesentlichen quer bzw. waagerecht in der Filtervorrichtung so angeordnet ist, daß sich die Reingasseite oberhalb der Rohgasseite befindet. Die Filterelemente sind "hängend" mit dem Kopf an der Trennwand befestigt. Üblicherweise sind mehrere Filterelemente hintereinander so vorgesehen, daß deren große, erste Seitenwände mit einem gewissen Abstand mit ihrer Haupterstreckungsebene im wesentlichen parallel zueinander angeordnet sind.

Die Köpfe der Filterelemente sind mit einem Befestigungs- und Versteifungsblech versehen, damit sie eine ausreichende Festigkeit besitzen, die eine Befestigung an den Köpfen erst möglich macht. Außerdem ist in den Filtervorrichtungen im Bereich der Bodenseite der Filterelemente eine Abstützung vorgesehen, von der die Filterelemente mit einer an deren Bodenseite angebrachten Fußleiste zusätzlich unterstützt werden. In der Praxis handelt es sich bei der Fußleiste um eine massiver Versteifungsleiste, die in ihrem unteren Ende ein nach unten offenes U-Profil besitzt und in ihrem oberen Ende in die Bodenseite des Filterelements eingeklebt ist.

Das Befestigungs- und Versteifungsblech am Kopf des Filterelements und die zusätzliche Abstützung des Filterelements nach unten in der Filtervorrichtung sind erforderlich, damit das Filterelement den Beanspruchungen des Betriebs standhalten kann. Gerade im Bereich des Kopfes treten am Filterelement große Belastungen auf, die durch das Gewicht des Filterelements selbst bedingt sind und während des Betriebs hervorgerufen werden. Dabei werden die Filterelemente in bestimmten Zeitabständen oder nach Erreichen eines voreingestellten Differenzdrucks durch das Filterelement durch einen der normalen Filterströmung entgegengesetzten Druckluftstoß abgereinigt, was dazu führt, daß Partikel, die sich auf der Rohgasseite des Filters abgesetzt haben, von der Filteroberfläche gelöst werden und in der Filtervorrichtung nach unten fallen, von wo aus sie entfernt werden können. Dieses Abreinigen führt zu Schwingungen, bzw. zu zusätzlichen, durch den Abreinigungsstoß hervorgerufenen Belastungen des Filterelements.

Bisher hat es sich bei dem Filterelementen aus zusammengesinterten Kunststoffteilchen so dargestellt, als ob eine einstückige Herstellung des Kopfes mit dem Rest des Filterelements sowohl aus Festigkeitsgründen als auch mit Blick auf eine besonders rationelle Fertigung zu den optimalsten Ergebnissen führt. Bestehen blieb aber das Manko, daß für die Herstellung relativ komplizierte Formen benötigt werden, daß an dem Filterelement zusätzliche Versteifungsteile benötigt werden und daß insbesondere bei längeren Filterelementen eine zusätzliche Abstützung am Fuß der Filterelemente in der Filtervorrichtung erforderlich ist.

Es ist deshalb die Aufgabe der vorliegenden Erfindung, ein Filterelement bereitzustellen, das einfacher herzustellen ist, bei dem keine zusätzlichen Versteifungsteile angebracht werden müssen, und das dennoch eine ausreichende Festigkeit besitzt.

Erfindungsgemäß wird das bei dem bekannten Filterelement dadurch geleistet, daß das Filterelement zwei miteinander vereinigte Hälften aufweist, die jeweils eine der ersten Seitenwände enthalten,
daß an der Bodenseite ein Fuß aus Kunstharz angegossen ist und
daß der Kopf aus Kunstharz besteht und an die ersten und die zweiten Seitenwände derart angegossen ist, daß er mit einem ersten Teil seiner Höhe die ersten und die zweiten Seitenwände außenseitig einfaßt und mit einem zweiten Teil seiner Höhe die ersten und die zweiten Seitenwände überragt und an deren Enden überdeckt, und
daß der Kopf im zweiten Teil seiner Höhe in der mindestens einen Durchstömungspassage einen strömungsgünstigen Übergang von dem zick-zack-artig oder gewellt begrenzten Raum zwischen den beiden ersten Seitenwänden zu einem im wesentlichen rechteckigen Strömungsquerschnitt schafft.

Der Vorteil der einfachen Herstellung des erfindungsgemäßen Filterelements zeigt sich hier einerseits in dem Vereinigen zweier Hälften aus zusammengesinterten Kunststoffteilchen, die jeweils eine der ersten Seitenwände enthalten, zum dem eigentlichen Filterbereich des Filterelements, was dazu führt, daß unter Verwendung nur einer einzigen Sinterform Filterelemente mit ziemlich unterschiedlichen Abmessungen hergestellt werden können. Die Hälften müssen nur aus einem grobgesagt plattenförmigen Gebilde aus zusammengesinterten Kunststoffteilchen auf das entsprechende Maß zugeschnitten werden. Es hat sich überraschenderweise herausgestellt, daß sich aus den labilen, instabilen Hälften durch das miteinander Vereinigen überaus stabile Filterelemente herstellen lassen. Das unmittelbare Angießen eines Kopfes und eines Fußes aus Kunstharz an die zwei miteinander vereinigten Hälften bringt eine weitere Einsparung mit sich, da das Kunstharzmaterial auch ohne zusätzliche Versteifungselemente eine ausreichende Festigkeit besitzt.

Es ist bekannt, daß das Kunstharz eine größere Festigkeit als das poröse zusammengesinterte Kunststoffmaterial besitzt. Entscheidend für eine gute Festigkeit des gesamten Filterelements ist aber bei der getrennten Herstellung des Kopfes von dem Rest des Filterelements der Übergang von den Seitenwänden zu dem Kopf. Erfindungsgemäß sind die Seitenwände in ihrem oberen Bereich sowohl von der Außenseite her als auch von ihrer Endseite her von dem Kunstharz des Kopfes eingeschlossen. Damit ist eine besonders große Verbindungsfläche zwischen den beiden Materialien gegeben. Vorzugsweise in das poröse Material bei den Verbindungsflächen eingetretenes Kunstharzmaterial ergibt einen allmählichen Übergang zwischen Kunstharz- und Sintermaterial, was die hohen Festigkeitsanforderungen besonders gut erfüllt. Außerdem ist der strömungsgünstige Übergang - von dem zick-zack-artig oder gewellt begrenzten Raum zwischen den beiden ersten Seitenwänden zu dem im wesentlichen rechteckigen Strömungsquerschnitt im Kopf - auch in der Lage die Kräfte von den Seitenwänden auf den Kopf bei allen Bereichen der ersten Seitenwände optimal zu übertragen, was die Festigkeit zusätzlich positiv beeinflußt.

Es hat sich gezeigt, daß eine Abstützung am Fußbereich bei erfindungsgemäßen Filterelementen selbst dann nicht unbedingt erforderlich ist, wenn diese relativ lang sind. Außerdem hat sich überraschenderweise herausgestellt, daß die Filterelemente so stabil sind, daß sie sogar in Filtervorrichtungen eingebaut werden können, deren Trennwand anders als bei konventionellen Filtervorrichtungen nicht quer im Gehäuse sondern hochkant im Gehäuse angeordnet ist. Die Filterelemente befinden sich dann in einer Einbauposition, in der sie verglichen mit der hängenden Position mit Blickrichtung auf eine der großen ersten Seitenwände um 90° gedreht sind. Auch in dieser Einbauposition erfolgt die Befestigung der Filterelemente am Kopf und das Filterelement ragt frei in den Rohgasbereich der Filtervorrichtung hinein. Es ist offensichtlich, daß hier besonders große Kräfte auf das Filterelement einwirken, da neben den üblichen Zugkräften auch Momentbelastungen auftreten.

Das Angießen des Kopfes führt zu einer relativ großen gestalterischen Freiheit für den Kopf und ermöglicht eine Herstellung des Kopfes, ohne irgendeine Nachbearbeitung. Nur so kann beispielsweise bereits beim Gießen des Kopfes eine glatte Dichtfläche hergestellt werden, die keiner Nachbearbeitung bedarf, es können Befestigungsmittel wie Öffnungen etc. für die Befestigung an der Trennwand und/oder eine Nut für eine Dichtung bei der Herstellung des Kopfes an- oder eingegossen werden. Es besteht auch die Möglichkeit zwischen den im wesentlichen parallelen langen Seitenwänden des Kopfes im Anschluß an die ersten großen Seitenwände Querversteifungswände vorzusehen. Demgegenüber war bei den bekannten Filterelementen eine Nachbearbeitung des Kopfes vor dem Anbringen des Befestigungs- und Versteifungsblechs erforderlich.

Vorzugsweise sind Wandbereiche der ersten Seitenwände zwischen den zweiten, schmalen Seitenwänden miteinander verbunden. Vorzugsweise wird eine Verbindung da erfolgen, wo Zacken oder Wellen von beiden ersten Seitenwänden näher beieinander sind. Eine Verbindung kann bei einigen oder allen Zacken oder Wellen vorgesehen sein. Die Verbindung kann mit Verbindungsstegen vorgenommen sein, die von den ersten Seitenwänden wegragen. Vorzugsweise aber nicht zwangsläufig ist eine Verbindung zwischen Kopf und Fuß des Filterelements durchgängig. Diese Verbindung zwischen den großen Seitenwänden in der Art einer gegenseitigen Abstützung erhöht die Stabilität des Filterelements beträchtlich. Dadurch wird speziell auch die Anfälligkeit der großen Seitenwände, beim Abreinigen Schwingungen auszuführen, reduziert. Speziell für den Einbau in Filtervorrichtungen mit einer hochkant gestellten Trennwand, d.h. die "seitliche" Befestigung, hat es sich als besonders günstig herausgestellt, wenn die Verbindungen zwischen den ersten Seitenwänden im wesentlichen regelmäßig vorgesehen sind und voneinander einen Abstand von zwischen etwa 0,9 bis 1,4 mal der Dicke des Filterelements (gemessen beim Kopf zwischen den Außenseiten der ersten Seitenwände) besitzen. Die bei der seitlichen Befestigung des Filterelements auftretende Momentenbelastung kann dadurch besonders günstig auf einzelne kleinere im Schnitt rechteckige Bereiche des Filters verteilt werden. Dann ist es auch besonders bevorzugt, Querversteifungswände des Kopfes mindestens bei einem Teil der Verbindungen zwischen den ersten Seitenwänden vorzusehen. Damit können auch im Bereich einer Verbindung Zug- und Druckkräfte in den Filterkopf eingetragen werden.

Besonders bevorzugt insbesondere für den seitlichen Einbau hat sich ein Filterelement herausgestellt, das im Querschnitt zwischen Kopf und Fuß im wesentlichen die Gestalt eines länglichen Rechtecks mit einer Längsachse besitzt und die zick-zack-artig verlaufenden, ersten Seitenwände erste und zweite Wandabschnitte aufweisen, wobei die ersten Wandabschnitte mit im wesentlichen rechten Winkel zu der Längsrichtung verlaufen, und die zweiten Wandabschnitte mit einem spitzen Winkel zu den ersten Wandabschnitten verlaufen. Insbesondere können die mit einem spitzen Winkel zu den ersten Wandabschnitten verlaufenden zweiten Wandabschnitte von den inneren Endbereichen eines ersten Wandabschnitts zu den äußeren Endbereichen des nächsten Wandabschnitts verlaufen. Es ist auch möglich, zwischen den ersten und zweiten Wandabschnitten zusätzliche weitere Wandabschnitte beispielsweise solche, die im wesentlichen im rechten Winkel zu den ersten Wandabschnitten, d. h. parallel zur Längsrichtung, verlaufen, aufweisen. Aus Stabilitätsgründen kann es bevorzugt sein, die ersten Wandabschnitte mit im wesentlichen gleichen Abstand voneinander anzuordnen. Der Einbau eines solchen Filterelements kann ebenso hängend erfolgen. Aber diese Konfiguration, die im Querschnitt im wesentlichen die Form eines Tannenbaums besitzt liefert speziell für die seitliche Befestigung eine besonders große Festigkeit durch die relativ spitzen Winkel zwischen den ersten und den zweiten Wandabschnitten und durch die im wesentlichen im rechten Winkel zu der Längsachse verlaufenden ersten Wandabschnitte. Es wird darauf hingewiesen, daß diese Art der Ausbildung des Filterelements und zugehörige Ausgestaltungen für sich allein genommen, ohne die Merkmale oder auch mit nur einem Teil der Merkmale des Anspruchs 1 als erfinderisch angesehen wird.

Es hat sich gezeigt, daß bei der Tannenbaumstruktur Winkel zwischen dem ersten und dem zweiten Wandabschnitt zwischen etwa 20° und 50° und vorzugsweise zwischen etwa 25° und 40° besonders günstig sind.

Die Erfindung wird nachfolgend anhand eines zeichnerisch dargestellen Ausführungsbeispiels näher erläutert. Es zeigen:
- Fig. 1: ein erfindungsgemäßes Filterelement an einer hochkant angeordneten Trennwand;
- Fig. 2: einen Schnitt durch das Filterelement an der in Fig. 1 mit II-II bezeichneten Position; und
- Fig. 3: einen Schnitt durch das Filterelement an der in Fig. 1 mit III-III bezeichneten Position.

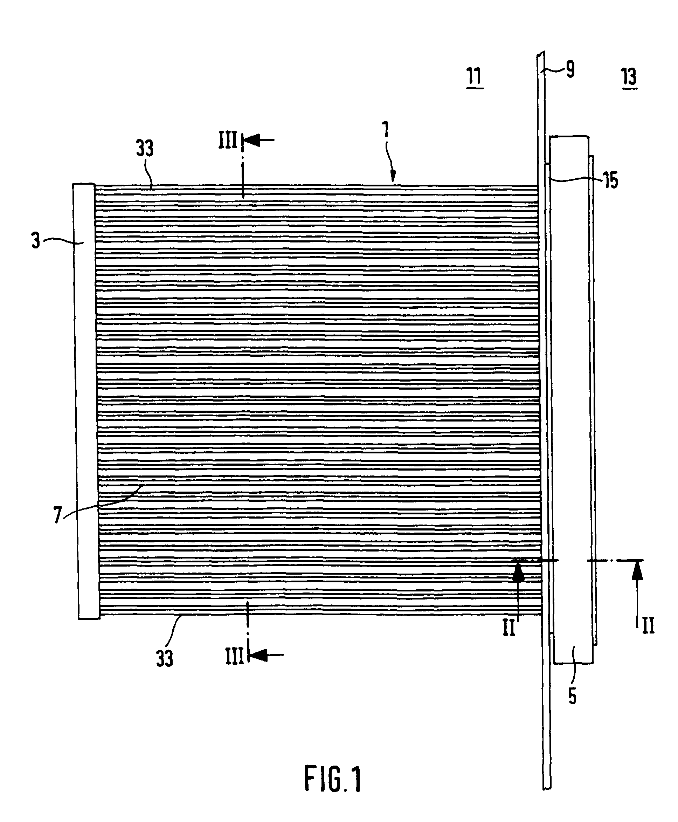

Fig. 1 zeigt ein Filterelement 1 mit einem Fuß 3 und einem Kopf 5 in Blickrichtung auf eine von zwei großen, zick-zack-artig oder gewellt verlaufenden, ersten Seitenwänden 7. Schmale, zweite Seitenwände 33 verbinden die ersten Seitenwände 7 seitlich miteinander zu einem kastenartigen Gebilde. Man erkennt ferner eine Trennwand 9 die Teil einer weiter nicht gezeigten Filtervorrichtung ist und die eine Rohgasseite 11 der Filtervorrichtung von einer Reingasseite 13 trennt. Das Filterlement 1 ist mit seinem Kopf 5 an der hochkant angeordneten Trennwand 9 "seitlich" befestigt, wobei der sogenannte reingasseitige Einbau des Filterelements 1 dargestellt ist. Dabei ist die Seitenfläche des Kopfes 5, die die Seitenwände 7, 33 überragt und zum Fuß hin gerichtet ist, an der Reingasseite der Trennwand 9 anliegend befestigt, und das Filterelement 1 ragt durch eine Öffnung in der Trennwand 9 hindurch. So kann ein Austausch des Filterelements 1 von der "sauberen" Reingasseite 13 her erfolgen. Alternativ ist auch der sogenannte rohgasseitige Einbau des Filterelements 1 möglich. Bei diesem ist der Kopf 5 mit seiner dem Fuß 3 entgegengesetzten Seitenfläche an der Rohgasseite 11 der Trennwand 9 anliegend befestigt. Der Ein- und Ausbau erfolgt hier über die Rohgasseite. Das Filterelement 1 kann statt seitlich auch hängend befestigt sein. Die Trennwand 9 ist dann quer in der Art eines Zwischenbodens in der Filtervorrichtung zwischen einer beispielsweise unten liegenden Rohgasseite 11 und einer oben liegenden Reingasseite 13 vorgesehen. Auch in dieser hängenden Einbauposition des Filterelements 1 kann entweder ein reingasseitiger oder ein rohgasseitiger Einbau des Filterelements vorgesehen sein. Häufig ist über den Filtervorrichtungen nicht genügend Platz vorhanden, so daß die reingasseitige Befestigung des Filterelements 1 und damit das Wechseln von der Reingasseite 13 her nicht realisiert werden kann. Hier ermöglicht die seitliche Befestigung in Verbindung mit dem reingasseitigen Einbau des Filterelements 1 den Einbau des Filterelements 1 von der Reingasseite 13 her, da Platz seitlich neben der Filtervorrichtung in der Regel vorhanden ist. Zwischen dem Kopf 5 des Filterelements 1 und der Trennwand 9 erkennt man eine Dichtung 15 als Abdichtung zwischen der Rohgasseite 11 und der Reingasseite 13.

Beim Betrieb der Vorrichtung wird das zu filternde Medium durch eine nicht gezeigte Öffnung in die Vorrichtung eingesaugt und strömt von der Rohgasseite 11 durch die porösen Seitenwände 7, 33 in das hohle Innere des Filterelements 1 und wird von dort durch eine Durchströmungsöffnung 19 im Kopf 5 auf die Reingasseite 13 hin gesaugt. Von dort aus wird es durch eine ebenfalls nicht gezeigte Öffnung wieder nach außerhalb der Vorrichtung abgegeben. Die von dem zu filternden Medium zu trennenden Feststoffteilchen werden von einer feinporösen Schicht auf der Oberfläche des Filterelements 1 zurückgehalten und bleiben dort zum Teil haften. Diese Schicht aus anhaftenden Feststoffteilchen wird in regelmäßigen Abständen durch eine Abreinigung beispielsweise durch einen Druckluftstoß, der der Strömungsrichtung entgegengesetzt ist, abgesprengt und fällt dann auf der Rohgasseite 11 der Vorrichtung zu Boden.

Ferner kann man in Fig. 1 leicht erkennen, welche Kräfte auf das Filterelement 1 bei der gezeigten seitlichen Befestigung einwirken. Anders als bei der üblichen "hängenden" Befestigung des Filterelements 1 in der Filtervorrichtung, bei der auf den Übergang zwischen Kopf 5 und Filterelement 1 in erster Linie Zugkräfte aufgebracht werden, führt die auskragende Anordnung des Filterelements 1 bei der seitlichen Befestigung zu einer Momentenbelastung und somit dort sowohl zu Zugals auch Druckkräften. So sind es in Fig. 1 im oberen Bereich des Übergangs in erster Linie die Zugkräfte, die auf den Übergang wirken, während es im unteren Bereich die Druckkräfte sind, die am Übergang auftreten. Zu ganz besonders schädlichen Belastungsspitzen kann es während des Abreinigens kommen, wo zu den stationären Belastungen die von dem Druckluftstoß erzeugten dynamischen Belastungen kommen, die das System in Schwingung versetzen und besonders am Übergang Schäden verursachen können.

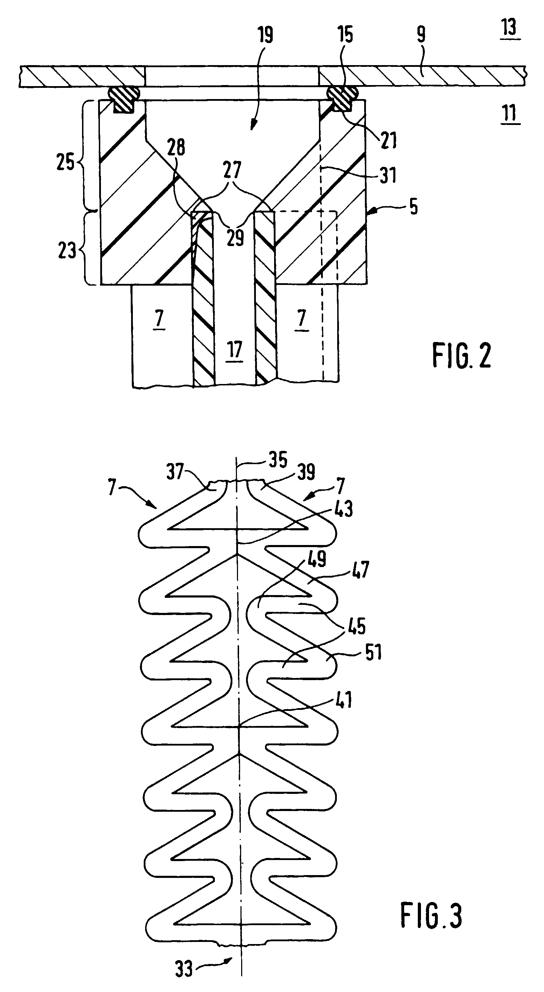

In der Fig. 2 erkennt man den zick-zack-artig oder gewellt begrenzten Raum 17 zwischen den beiden ersten Seitenwänden 7 der sich in der Durchströmungspassage 19 durch den Kopf 5 bis zu der Reingasseite 13 fortsetzt. Es ist der rohgasseitige Einbau des Filterelements gezeigt. Außerdem erkennt man zwischen der Trennwand 9 und dem Kopf 5 die Dichtung 15, die in einer Nut 21, die in den Kopf 5 eingegossen ist, aufgenommen ist.

Die Seitenwände des Filterelements 1 sind poröse Gebilde, die im wesentlichen ausschließlich aus zusammengesinterten Kunststoffteilchen beispielsweise aus Polyethylen bestehen. Es kann sich auch um Mischungen aus verschiedenen Kunststoffteilchen und insbesondere um Mischungen aus ultrahochmolekularen und hochmolekularen Kunststoffteilchen handeln. Bei dem Sinterprozeß werden die Teilchen in der Form gerade so weit angeschmolzen, daß sie sich an ihren Berührungsstellen miteinander verbinden können. Die Porengröße läßt sich durch die Teilchengröße und durch die Prozeßparameter bei der Herstellung der Gebilde steuern. Zusätzlich kann auf der Zuströmseite des Filterelements eine feine poröse Beschichtung, beispielsweise aus feinkörnigeren Polytetrafluorethylenteilchen oder aus Fasern oder aus einer Mischung von Teilchen und Fasern, aufgebracht sein, wodurch sich die Oberflächenfiltrationseigenschaften besonders gut steuern lassen und besonders gut an die zu filternden Stoffe anpassen lassen. Man erkennt leicht, daß bei dieser zusammengesinterten Struktur des Filterelements aus Teilchen, die jeweils nur in ihren Randbereichen miteinander verbunden sind, keine besonders hohe Belastbarkeit gegeben ist. Das trifft insbesondere dort zu, wo lokal konzentriert Belastungen auftreten.

Bei dem in Fig. 2 gezeigten Übergang sind die Seitenwände 7 von dem Kopf 5 mit einem ersten Teil 23 seiner Höhe außenseitig eingefaßt, während ein zweiter Teil 25 der Höhe des Kopfes 5 die Seitenwände 7 nach oben überragt und diese an deren oberen Enden 27 überdeckt. Damit wird die Verbindungsfläche zwischen den Seitenwänden 7 und dem Kopf 5 besonders groß. Um eine besonders innige Verbindung zwischen dem Kopf 5 und den Seitenwänden 7 herzustellen, kann die Viskosität des flüssigen Kunstharzes so gewählt werden, daß dieses durch Kapilarwirkung in die grobporösen Seitenwände 7 eine gewisse Distanz hineingelangt. Da dieser Kapillareffekt je nach der lokalen Gegebenheit der unterschiedlich stark auftritt, dringt das Kunstharz unterschiedlich weit in die Struktur ein, was zu einem allmählichen Übergang zwischen dem Kopf 5 und der porösen Struktur der Seitenwände 7 führt. Dieser Übergangsbereich ist auf der linken Seite der Fig. 2 mit dem Bezugszeichen 28 schematisch dargestellt.

Grundsätzlich ist in Fig. 2 der Schnitt durch das Filterelement 1 an einer Stelle des Filterelements 1 gezeigt, wo die zick-zackartig verlaufenden, ersten Seitenwände 7 einander nahe kommen. Auf der rechten Seite der Figur ist aber auch in Schraffur der am weitesten außen liegende, dahinterliegende Wandbereich des Verlaufs gezeigt. Dabei ist auch gezeigt, wie die Durchströmungspassage 19 strömungsgünstig von einem im wesentlichen rechteckigen Strömungsquerschnitt im oberen Bereich des Kopfes 5 in das Innere des Filterelements 1 übergeht. Der Übergang verläuft von dem am weitesten innen liegenden Wandbereichen trichterförmig schräg nach oben außen. Während er von den am weitesten außen liegenden Wandbereichen im wesentlichen geradlinig oder mit nur einer geringen Neigung verläuft (siehe Position 31).

Grundsätzlich eignet sich jedes beliebige Kunstharz zum Angießen von Kopf 5 und Fuß 3 an die Seitenwände 7 des Filterelements. Zur Beschleunigung der Herstellung sind jedoch schnell aushärtende Kunstharze bevorzugt oder auch solche Kunstharze, deren Aushärten durch Wärmezufuhr deutlich beschleunigt werden kann.

Im Schnitt der Fig. 3 erkennt man zum Teil zwei erste Seitenwände 7 und eine schmale, zweite Seitenwand 33. Man erkennt außerdem, daß das Filterelement 1 aus zwei entlang ihrer Längsachse 35 miteinander vereinigten Hälften 37 und 39 gebildet ist. Die beiden Hälften 37 und 39 können miteinander beispielweise durch Kleben, durch Sintern, durch Verschweißen oder sonstwie vereinigt sein. Bei dem Aspekt der Erfindung, der die "tannenbaumartige" Form des Filterelements 1 im Vordergrund sieht, ist auch eine einstückige Herstellung des Filterelements 1 möglich.

Die beiden Hälften 37 und 39 sind außer an den zweiten schmalen Seitenwänden 33 auch zwischen diesen entlang von Wandbereichen 41 und 43 vorzugsweise vom Kopf 5 bis zum Fuß 3 miteinander verbunden. Das ergibt eine Unterteilung in kleinere, kastenartige Elemente oder Zellen, was die Festigkeit des gesamten Filterelements 1 erhöht, da die einzelnen Zellen selbst bereits eine relativ hohe Festigkeit besitzen.

Die ersten Seitenwände 7 besitzen einen im wesentlichen zick-zack-förmigen Verlauf, und sie sind aus aufeinanderfolgenden ersten und zweiten Wandabschnitten 45, 47 gebildet, die aneinander anschließen. Die ersten Wandabschnitte 45 verlaufen im wesentlichen im gleichen Abstand zueinander im rechten Winkel zur Längsrichtung 35 und die zweiten Wandabschnitte 47 verlaufen von dem inneren Endbereich 49 eines ersten Wandabschnitts 45 zu dem äußeren Endbereich 51 des nächsten ersten Wandabschnitts 45. Das Filterelement 1 besitzt somit im Querschnitt eine im wesentlichen tannenbaumartige Gestalt. Die im rechten Winkel zur Längsachse vorgesehenen ersten Wandabschnitte 45 sorgen für eine besonders hohe Steifigkeit der ersten Seitenwände 7 im rechten Winkel zu der Längsachse 35, was insbesondere bei der seitlichen Befestigung des Filterelements 1 ein Knicken oder Beulen der ersten, großen Seitenwände 7 wirksam ausschließen kann. Die zweiten Wandabschnitte bilden zusammen mit den ersten Wandabschnitten einen relativ spitzen Winkel vorzugsweise im Bereich von etwa 30°, was die Steifigkeit noch weiter erhöht.

In der bevorzugten Einbauposition bei seitlicher Befestigung verlaufen die zweiten Wandabschnitte 47 in dem Schnitt der Fig. 3 von innen nach außen unten, so daß Partikel beim Filterbetrieb daran nicht so leicht abgelagert werden. Auch beim Abreinigen ist die Strömungskomponente im wesentlichen rechtwinklig zu den zweiten Wandabschnitten 47, wodurch die Partikel beim Abreinigen von der Längsachse 35 weg nach außen geblasen werden.

Zudem ist die bevorzugte Strömungsrichtung bei seitlicher Befestigung entlang des Filterelements 1 von oben nach unten, so daß sich durch die schräge Anordnung der zweiten Wandabschnitte 47 eine besonders günstige Zuströmung zu diesen zweiten Wandabschnitten 47 ergibt.

## Patentansprüche

1. Filterelement (1) aus zusammengesinterten Kunststoffteilchen, das im wesentlichen die Gestalt eines schmalen, hohlen Kastens mit zwei großen, zick-zack-artig oder gewellt verlaufenden, ersten Seitenwänden (7), zwei schmalen, zweiten Seitenwänden (33), die die ersten Seitenwände (7) miteinander verbinden, einer geschlossenen Bodenseite und einer gegenüberliegenden, offenen Seite besitzt, wobei die Berge und Täler der ersten Seitenwände (7) einen Verlauf in Richtung von der Bodenseite zu der offenen Seite haben, wobei ferner an der Bodenseite ein Fuß (3) vorgesehen ist, und wobei an der offenen Seite des Filterelements (1) ein Kopf (5) zur Befestigung vorgesehen ist, der länglich ist und mindestens eine Durchströmungspassage (19) bildet,
**dadurch gekennzeichnet**,
daß das Filterelement (1) zwei miteinander vereinigte Hälften (37;39) aufweist, die jeweils eine der ersten Seitenwände (7) enthalten,
daß der Kopf (5) und der Fuß (3) aus Kunstharz angegossen sind, wobei der Kopf (5) derart an die ersten und die zweiten Seitenwände (7;33) angegossen ist, daß er mit einem ersten Teil (23) seiner Höhe die ersten und die zweiten Seitenwände (7;33) außenseitig einfaßt und mit einem zweiten Teil (25) seiner Höhe die ersten und die zweiten Seitenwände (7;33) überragt und an deren Enden (27) überdeckt, und
daß der Kopf (5) im zweiten Teil (25) seiner Höhe in der mindestens einen Durchströmungspassage (19) einen strömungsgünstigen Übergang (31) von dem zick-zack-artig oder gewellt begrenzten Raum (17) zwischen den beiden ersten Seitenwänden (7) zu einem im wesentlichen rechteckigen Strömungsquerschnitt schafft.

2. Filterelement (1) nach Anspruch 1, dadurch gekennzeichnet, daß an den Kopf (5) Befestigungsmittel und/oder eine Nut (21) für eine Dichtung (15) angeformt sind.

3. Filterelement (1) nach Anspruch 1 oder 2, dadurch gekennzeichnet, daß der Kopf (5) in Draufsicht mit der Blickrichtung zu der Bodenseite eine längliche Gestalt mit zueinander im wesentlichen parallelen langen Seitenwänden besitzt, die gegeneinander durch mindestens eine Querversteifungswand abgestützt sind.

4. Filterelement (1) nach einem der Ansprüche 1 bis 3, bei dem der zick-zack-artige oder gewellte Verlauf der ersten Seitenwände (7) spiegelsymmetrisch zu einer Symmetrieebene zwischen den ersten Seitenwänden (7) ist.

5. Filterelement (1) nach einem der Ansprüche 1 bis 4, bei dem Wandbereiche (41;43) der ersten Seitenwände (7) zwischen den zweiten, schmalen Seitenwänden (33) miteinander verbunden sind.

6. Filterelement (1) nach Anspruch 5, dadurch gekennzeichnet, daß eine Querversteifungswand des Kopfes dort vorgesehen ist, wo auch eine Verbindung zwischen den ersten Seitenwänden (7) gebildet ist.

7. Filterelement (1) nach Anspruch 5 oder 6, dadurch gekennzeichnet, daß die Verbindungen zwischen den ersten Seitenwänden (7) im wesentlichen regelmäßig vorgesehen sind und voneinander einen Abstand von zwischen etwa 0,9 bis 1,4 mal der Dicke des Filterelements (1) besitzen.

8. Filterelement (1) nach einem der Ansprüche 1 bis 7, dadurch gekennzeichnet, daß das Filterelement (1) im Querschnitt zwischen Kopf (5) und Fuß (3) im wesentlichen die Gestalt eines länglichen Rechtecks mit einer Längsachse (35) besitzt und die zick-zack-artig verlaufenden, ersten Seitenwände (7) erste und zweite Wandabschnitte (45;47) aufweisen, wobei die ersten Wandabschnitte (45) mit im wesentlichen rechten Winkel zu der Längsrichtung (35) verlaufen, und die zweiten Wandabschnitte (47) mit einem spitzen Winkel zu den ersten Wandabschnitten (45) verlaufen.

9. Filterelement (1) nach Anspruch 8, dadurch gekennzeichnet, daß der Winkel zwischen den ersten und den zweiten Wandabschnitten (45;47) zwischen etwa 20° und 50° und vorzugsweise zwischen etwa 25° und 40° liegt.

10. Filterelement (1) nach einem der Ansprüche 1 bis 9, bei dem auf der Zuströmseite des Filterelements (1) eine feinerporige Beschichtung vorgesehen ist.

## Claims

1. A filter element (1) of sintered-together plastics particles having substantially the shape of a narrow, hollow box with two large, zigzag or corrugated first side walls (7), two narrow second side walls (33) interconnecting the first side walls (7), a closed bottom side and an opposite open side, with the peaks and valleys of the first side walls (7) extending in the direction from the bottom side to the open side and the bottom side being further provided with a foot (3), and the filter element (1), at the open side, having a head (5) for attachment which is elongate and constitutes at least one flow passage (19),
characterized in
that the filter element (1) comprises two unified halves (37; 39) each containing one of the first side walls (7),
that the head (5) and the foot (3) are cast on of synthetic resin, with the head (5) being cast on the first and second side walls (7; 33) such that it surrounds with a first part (23) of its height the first and second side walls (7; 33) on the outside and projects with a second part (25) of its height beyond the first and second side walls (7; 33) so as to cover the ends (27) thereof, and
in that the head (5) forms in the second part (25) of its height, in the at least one flow passage (19), an, in terms of flow, advantageous transition (31) from the zigzag or corrugated space (17) confined between the two first side walls (7) to a substantially rectangular cross-section of flow.

2. The filter element (1) of claim 1,
characterized in that the head (5) has formed thereon mounting means and/or a groove (21) for a gasket (15).

3. The filter element (1) of claim 1 or 2,
characterized in that the head (5), as seen in a plan view in viewing direction towards the bottom side, is of elongate configuration with mutually substantially parallel long side walls which are supported with respect to each other by at least one transverse reinforcing wall.

4. The filter element (1) of any of claims 1 to 3,
wherein the zigzag or corrugated pattern of the first side walls (7) is a mirror image to a plane of symmetry between the first side walls (7).

5. The filter element (1) of any of claims 1 to 4,
wherein wall portions (41; 43) of the first side walls (7) are connected to each other between the second, narrow side walls (33).

6. The filter element (1) of claim 5,
characterized in that a transverse reinforcing wall of the head is provided at a location where there is also formed a connection between the first side walls (7).

7. The filter element (1) of claim 5 or 6,
characterized in that the connections between the first side walls (7) are disposed substantially at regular intervals and are spaced from each other by a distance of between about 0.9 to 1.4 times the thickness of the filter element (1).

8. The filter element (1) of any of claims 1 to 7,
characterized in that the filter element (1), in a cross-section between head (5) and foot (3), has substantially the shape of an elongate rectangle having a longitudinal axis (35), and the zigzag first side walls (7) have first and second wall sections (45; 47), with the first wall sections (45) extending substantially at right angles to the longitudinal direction (35) and the second wall sections (47) extending at an acute angle to the first wall sections (45).

9. The filter element (1) of claim 8,
characterized in that the angle between the first and second wall sections (45; 47) is between approx. 20° and 50° and preferably between approx. 25° and 40°.

10. The filter element (1) of any of claims 1 to 9,
wherein a finer-pore coating is provided on the afflux side of the filter element (1).

## Revendications

1. Élément de filtrage (1) en particules frittées de matière plastique, qui possède la forme d'un caisson étroit et creux avec deux premières parois latérales longues (7), s'étendant en zigzag, ou suivant des ondulations, deux deuxièmes parois latérales étroites (3) qui relient ensemble les premières parois latérales (7), un côté de fond fermé, et un côté ouvert opposé, les sommets et les vallées des premières parois latérales (7) présentant un tracé partant du côté du fond en direction vers le côté ouvert, et dans lequel il est prévu un pied (3) sur le côté du fond, et il est prévu sur le côté ouvert de l'élément de filtrage (1) une tête (5) allongée qui forme au moins un passage d'écoulement traversant (19),
caractérisé en ce que :
- l'élément de filtrage (1) présente deux moitiés réunies l'une à l'autre (37 ; 39), qui contiennent respectivement l'une des premières parois latérales (7),
- la tête (5) et le pied (3) sont coulés à partir de résine synthétique, ladite tête (5) étant coulée sur les premières et sur les deuxièmes parois latérales (7 ; 33) de telle façon qu'elle englobe avec une première partie (23) de sa hauteur les premières et les deuxièmes parois latérales (7 ; 33) du côté extérieur, et dépasse avec une deuxième partie (25) de sa hauteur les premières et les deuxièmes parois latérales (7 ; 33) et les recouvre au niveau de leurs extrémités (27), et
- la tête (5) comporte dans une deuxième partie (25) de sa hauteur et dans ledit au moins un passage d'écoulement traversant (19) une transition (31) favorable sur le plan hydrodynamique depuis l'espace délimité par des zigzags ou par des ondulations (17) entre les deux premières parois latérales (7) vers une section d'écoulement sensiblement rectangulaire.

2. Élément de filtrage (1) selon la revendication 1, caractérisé en ce que sur la tête (5) sont formés des moyens de fixation et/ou une gorge (21) pour un joint (15).

3. Élément de filtrage (1) selon l'une ou l'autre des revendications 1 et 2, caractérisé en ce que la tête (5) possède, en vue de dessus et en observant en direction du côté du fond, une configuration allongée avec des parois latérales longues et sensiblement parallèles l'une à l'autre, qui sont supportées l'une contre l'autre par au moins une paroi de renfort transversale.

4. Élément de filtrage (1) selon l'une des revendications 1 à 3, dans lequel le tracé en zigzag ou ondulé des premières parois latérales (7) est symétrique par rapport à un plan de symétrie entre les premières parois latérales (7).

5. Élément de filtrage (1) selon l'une des revendications 1 à 4, dans lequel des régions de parois (41 ; 43) des premières parois latérales (7) sont reliées ensemble entre les deuxièmes parois latérales étroites (33).

6. Élément de filtrage (1) selon la revendication 5, caractérisé en ce qu'il est prévu une paroi de renfort transversale de la tête à l'emplacement où est également formée une liaison entre les premières parois latérales (7).

7. Élément de filtrage (1) selon l'une ou l'autre des revendications 5 et 6, caractérisé en ce que les liaisons entre les premières parois latérales (7) sont prévues sensiblement régulièrement et possèdent les unes par rapport aux autres une distance comprise entre environ 0,9 et 1,4 fois l'épaisseur de l'élément de filtrage (1).

8. Élément de filtrage (1) selon l'une des revendications 1 à 7, caractérisé en ce que l'élément de filtrage (1) possède en section transversale entre la tête (5) et le pied (3) sensiblement la configuration d'un rectangle allongé avec un axe longitudinal (35), et en ce que les premières parois latérales en zigzag (7) comprennent des premiers et des deuxièmes tronçons de parois (45 ; 47), lesdits premiers tronçons de parois (45) s'étendant sensiblement à angle droit par rapport à la direction longitudinale (35), et les deuxièmes tronçons de parois (47) s'étendant sous un angle aigu par rapport aux premiers tronçons de parois (45).

9. Élément de filtrage (1) selon la revendication 8, caractérisé en ce que l'angle entre les premiers et les deuxièmes tronçons de parois (45 ; 47) est compris entre environ 20° et 50°, et de préférence entre environ 25° et 40°.

10. Élément de filtrage (1) selon l'une des revendications 1 à 9, dans lequel est prévu un revêtement à pores fines sur le côté d'entrée de l'élément de filtrage (1).
